Europäisches Patentamt

European Patent Office

Office européen des brevets

(11) Veröffentlichungsnummer: **0 405 211 A1**

# (12) EUROPÄISCHE PATENTANMELDUNG

(21) Anmeldenummer: 90111000.7

(22) Anmeldetag: 11.06.90

(51) Int. Cl.5: **B09B 3/00**

(30) Priorität: 24.06.89 DE 3920768

(43) Veröffentlichungstag der Anmeldung:
02.01.91 Patentblatt 91/01

(84) Benannte Vertragsstaaten:
**AT BE CH DE ES FR GB LI NL SE**

(71) Anmelder: **Beteiligungen Sorg GmbH & Co. KG KG**
**Stoltestr. 23**
**D-8770 Lohr/Main(DE)**

Anmelder: **METALLGESELLSCHAFT AKTIENGESELLSCHAFT**
**Reuterweg 14 Postfach 10 15 01**
**D-6000 Frankfurt 1(DE)**

(72) Erfinder: **Sorg, Helmut, Dipl.-Ing.**
**Himbeergrund 27**
**D-8752 Glattbach(DE)**
Erfinder: **Pieper, Helmut, Dipl.-Ing.**
**Buchenstrasse 19**
**D-8770 Lohr/Main(DE)**
Erfinder: **Zschocher, Hartmut, Dr.**
**Goethestrasse 58a**
**D-8752 Kleinostheim(DE)**
Erfinder: **Merlet, Heinz, Dipl.-Ing.**
**Philipp-Kremer-Strasse 23**
**D-6233 Kelkheim/Ts.(DE)**
Erfinder: **Mayer-Schwinning, Gernot, Dipl.-Ing.**
**In den Hessengärten 8**
**D-6380 Bad Homburg(DE)**

(74) Vertreter: **Schulze Horn, Stefan, Dipl.-Ing. M.Sc.**
**Goldstrasse 36**
**D-4400 Münster(DE)**

(54) **Vorrichtung zur Durchführung eines Verfahrens zur Überführung von festen, weitgehend wasserfreien Abfallstoffen in Glasform.**

(57)
2.1. Eine Vorrichtung der genannten Art ist in der Patentanmeldung P 38 41 889.4 beschrieben. Bei dieser Vorrichtung kann es unter ungünstigen Umständen dazu kommen, daß eine vollständige thermische Zerstörung der toxischen Bestandteile des Abgases nicht gewährleistet ist. Durch Weiterentwicklung der Vorrichtung soll dieser Nachteil behoben werden.

2.2. Die verbesserte Vorrichtung kennzeichnet sich dadurch, daß im Oberbau (42) des Ofens (4) oberhalb des gemengefreien Teils der Oberfläche (84') der Glasschmelze (84) wenigstens ein sich quer durch den Oberbau (42) erstreckender dessen freien Querschnitt im wesentlichen überdekkender Gasströmungs-Leitkörper (49) angeordnet ist, welcher eine Anzahl von parallelen, in Ofenlängsrichtung verlaufenden Durchgangsöffnungen (49') aufweist. Die Abgasströmung wird hierdurch turbulenzfrei und das Verweilzeitspektrum der Abgasteilchen wird vorteilhaft schmal, was eine vollständige Zerstörung der toxischen Abgasbestandteile sicherstellt.

2.3. Die Vorrichtung eignet sich insbesondere für die Überführung solcher Abfallstoffe in Glasform, die bei ihrer Erhitzung toxische Bestandteile, vor allem Dioxine und Furane, freisetzen oder bilden.

EP 0 405 211 A1

Fig. 1

## VORRICHTUNG ZUR DURCHFÜHRUNG EINES VERFAHRENS ZUR ÜBERFÜHRUNG VON FESTEN, WEITGEHEND WASSERFREIEN ABFALLSTOFFEN IN GLASFORM

Die Erfindung betrifft eine Vorrichtung nach dem Oberbegriff des Patentanspruches 1.

Die genannte Vorrichtung ist in der veröffentlichten deutschen Patentanmeldung P 38 30 899.1 ausführlich beschrieben. Unter anderem ist es mit dieser Vorrichtung möglich, bei der Verglasung freiwerdende, im Abgas mitgeführte toxische Verbindungen, insbesondere Dioxine und Furane, thermisch zu zerstören, indem das Abgas über einen gemengefrei gehaltenen,Teil der Oberfläche der Glasschmelze geführt wird. Unter ungünstigen Umständen kann es hier jedoch für Teilmengen des Abgases dazu kommen, daß die für die thermische Zerstörung er forderlichen Bedingungen hinsichtlich einer ausreichenden Verweilzeit und/oder einer ausreichend hohen Temperatur nicht gewährleistet sind und daß eine Neubildung toxischer Verbindungen im Anschluß an die Erhitzung nicht sicher auszuschließen ist.

Es stellt sich daher die Aufgabe, die eingangs genannte Vorrichtung so weiterzuentwickeln, daß eine thermische Zerstörung der toxischen Verbindungen unter allen betrieblichen Umständen gewährleistet ist. Weiter soll eine nachfolgende Neubildung toxischer Verbindungen sicher ausgeschlossen sein.

Die Lösung dieser Aufgabe gelingt erfindungsgemäß durch eine Vorrichtung der eingangs genannten Art, welche dadurch gekennzeichnet ist, daß im Oberbau des Ofens oberhalb des gemengefreien Teils der Oberfläche der Glasschmelze wenigstens ein sich quer durch den Oberbau erstreckender, dessen freien Querschnitt im wesentlichen überdeckender Gasströmungs-Leitkörper angeordnet ist, welcher eine Anzahl von parallelen, in Ofenlängsrichtung verlaufenden Durchgangsöffnungen aufweist.

Mit der Erfindung wird erreicht, daß die Abgasströmung innerhalb des Oberbaus des Glasschmelzofens von Turbulenzen freigehalten wird und daß sich eine weitestgehend laminare Strömung mit über den Oberbau-Querschnitt sehr gleichmäßiger Strömungsgeschwindigkeit einstellt. Damit wird das Verweilzeit-Spektrum der Teilchen des Abgasstromes relativ schmal, so daß für alle Teile des Abgases eine ausreichend lange und starke Erhitzung gewährleistet ist, um die mitgeführten toxischen Verbindungen sicher zu zerstören.

Bei größerer Längenausdehnung des gemengefreien Teils des Oberbaus des Glasschmelzofens ist es vorteilhaft, mehrere Gasströmungs-Leitkörper im Abstand voneinander in Reihe geschaltet im Oberbau des Glasschmelzofens anzuordnen. Hierdurch werden infolge der Reibung der Gasströmung auch nach einer Vergleichmäßigung ansonsten auftretende Turbulenzen vermieden oder wenigstens vermindert.

Weitere vorteilhafte Ausgestaltungen und weiterbildungen der Erfindung sind in den Unteransprüchen 3 bis 11 angegeben.

Im folgenden werden Ausführungsbeispiele der Erfindung anhand einer Zeichnung erläutert. Die Figuren der Zeichnung zeigen:

Figur 1 eine Vorrichtung mit einem Gasströmungs-Leitkörper, im Längsschnitt,

Figur 2 die Vorrichtung aus Figur 1 im Querschnitt entlang der Linie II-II in Figur 1,

Figur 3 einen zweiten Gasströmungs-Leitkörper als Teil der Vorrichtung, in perspektivischer Ansicht, und

Figur 4 die Vorrichtung mit einem dritten Gasströmungs-Leitkörper, in einer der Figur 2 entsprechenden Darstellung.

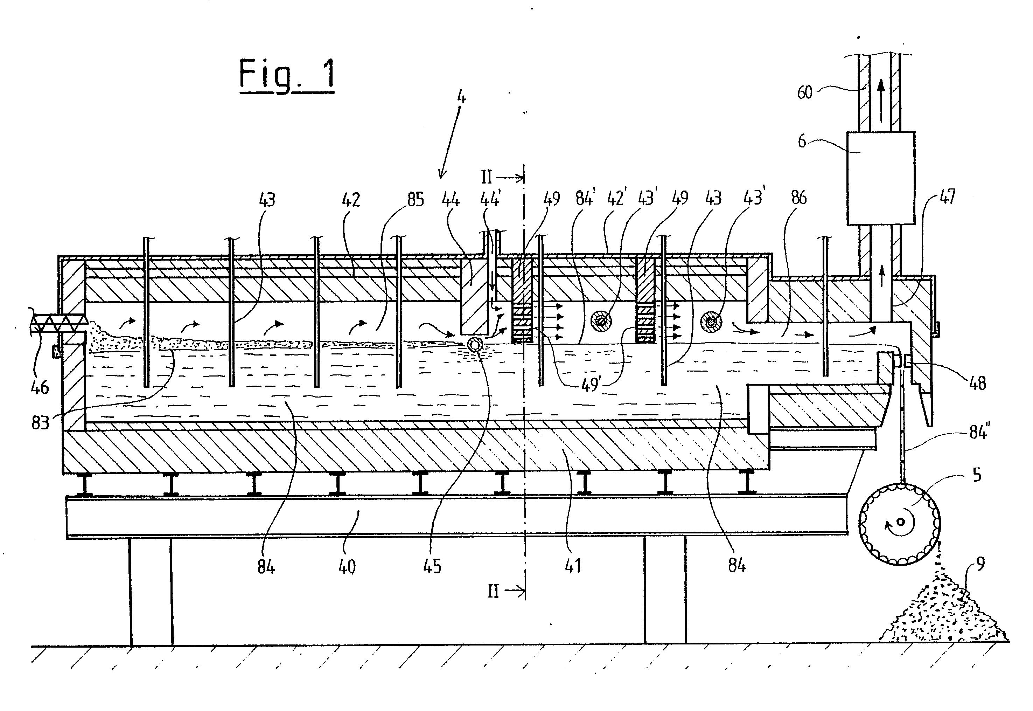

Der in Figur 1 dargestellte Glasschmelzof en 4 besteht aus einer Wanne 41 aus Feuerfestmaterial, die nach oben durch einen Oberbau 42, ebenfalls aus Feuerfestmaterial, abgedeckt ist. Die Wanne 41 und der Oberbau 42 ruhen auf einer Tragkonstruktion 40, die hier aus Stahlträgern gebildet ist. Außenseitig ist der Oberbau 42 des Glasschmelzofens 4 von einem gasdichten Mantel 42′ umgeben, der aus Stahlblech besteht und der bis zum oberen Rand der wanne 41 herabreicht und dort mit dieser dichtend verbunden ist.

Am vorderen, d.h. in Figur 1 linken Ende des Glasschmelzofens 4 ist eine Gemengeaufgabevorrichtung 46 in Form einer Förderschnecke angedeutet, mittels welcher aufzuschmelzendes Gemenge, zusammengesetzt aus Abfallstoffen und Zuschlagstoffen, in das Innere des Glasschmelzofens 4 gefördert werden kann.

Von oben her sind, durch den Oberbau 42 und den Mantel 42′ verlaufend, Heizelektroden 43 gasdicht in das Innere des Glasschmelzofens 4 geführt. Das Innere des Glasschmelzofens 4 ist zwei unterschiedliche Bereiche aufgeteilt, nämlich einen vorderen Schmelzteil, der in der Figur 1 links liegt, und einen hinteren Erhitzungsteil, der in der Figur 1 rechts liegt. Die Aufteilung des Glasschmelzofens 4 in die beiden genannten Bereiche erfolgt durch einen als Teil des Oberbaus 42 ausgebildeten, von diesem nach unten vorragenden, abgehängten scheitrechten Bogen 44, der im Betrieb des Glasschmelzofens 4 bis knapp über die Oberfläche 84′ einer in dem Ofen 4 befindlichen Glasschmelze 84 reicht und eine vertikale Trennwand für das Innere des Oberbaus 42 des Ofens 4 bildet. Weiterhin ist unterhalb des Bogens 44 ein parallel zu diesem quer durch den Glasschmelzofen 4 verlaufendes Kühlmittelrohr 45 vorgesehen, welches genau in Höhe der Oberfläche 84′ der Glasschmelze 84 liegt und dazu dient, die Glasschmelze 84 in der Umgebung des Rohres 45 zum Erstarren zu bringen.

Am hinteren, d.h. in Figur 1 rechten Ende des Glasschmelzofens 4 ist ein Glasschmelzeauslauf 48 vorgesehen, dem eine hier nur schematisch dargestellte Glasverarbeitungsmaschine 5 nachgechaltet ist. Ebenfalls am hinteren Ende des Glasschmelzofens 4 ist schließlich noch eine durch den Oberbau 42 nach oben verlaufende Abgas-Abzugsöffnung 47 vorhanden.

Soweit wie bisher beschrieben, entspricht der in Figur 1 dargestellte Glasschmelzofen 4 der in der deutschen Patentanmeldung P 38 30 899.1 beschriebenen Ausführung.

Der wesentliche Unterschied zwischen dem hier dargestellten Glasschmelzofen 4 und der früheren Ausführung besteht darin, daß hier im hinteren, d.h. in Figur 1 rechten Teil des Oberbaus 42 Strömungsleitkörper 49 angeordnet sind. Bei dem hier vorliegenden Ausführungsbeispiel sind im Verlauf des hinteren Teils des Oberbaus 42 zwei Strömungsleitkörper 49 angeordnet, wobei der vordere, d.h. in Figur 1 linke Strömungsleitkörper 49 kurz hinter dem Bogen 44 liegt. Die Strömungsleitkörper 49 haben die Form von hochkant stehenden, quer durch den Oberbau 42 des Glasschmelzofens 4 verlaufenden Platten, deren Unterkante bis unmittelbar über den Glasschmelzespiegel 84′ reicht. Der freie Querschnitt des Inneren des Oberbaus 42 wird somit durch den Strömungsleitkörper 49 praktisch vollständig überdeckt. Im unteren Teil des Strömungsleitkörpers 49, der in dem freien Inneren des Oberbaus 42 liegt, sind in Längsrichtung des Glasschmelzofens 4 verlaufende Durchgangsöffnungen 49′ angebracht, die einen Durchtritt des Abgases 86 erlauben. Die Durchgangsöffnungen 49′ sorgen dafür, daß das Abgas 86 nach dem Austritt aus dem Strömungsleitkörper 49 eine laminare, d.h. turbulenzfreie Strömung aufweist. Die so erzielte Vergleichmäßigung der Strömungsgeschwindigkeit des Abgases 86 innerhalb des Oberbaus 42 des Glasschmelzofens 4 sorgt dafür, daß sämtliche Teilchen des Abgases 86 für eine ausreichend lange Zeit der im Oberbau 42 herrschenden Temperatur zur Zerstörung der im Abgas 86 enthaltenen toxischen Verbindungen ausgesetzt sind.

Weiterhin sind im Oberbau 42 des Glasschmelzofens 4 gemäß Figur 1 zusätzliche Heizmittel 43′ vorgesehen, die hier als quer durch das Innere des Oberbaus 42 verlaufende Widerstands-Heizelemente ausgebildet sind. Zum Schutz gegen die aggressive Wirkung der Abgase 86 sind die eigentlichen Widerstands-Heizelemente von Schutzrohren umgeben. Mit diesen zusätzlichen Heizmitteln 43′ kann die Temperatur des Abgases 86 beeinflußt werden, d.h. insbesondere über die sich aufgrund der Wärmeabgabe aus der Glasschmelze 84 einstellende Temperatur hinaus noch angehoben werden.

Ein weiteres neues Merkmal des Glasschmelzofens 4 stellt eine zusätzliche Einlaßöffnung 44′ dar, die im Anfangsbereich des hinteren, gemengefreien Teils des Glasschmelzofens 4 durch dessen Oberbau 42 geführt ist und in dessen Inneres mündet. Durch diese zusätzliche Einlaßöffnung 44′ können neben dem festen Gemenge weitere Stoffe, insbesondere gasförmige und/oder flüssige Stoffe, in den Glasschmelzofen 4 eingebracht werden. Diese Stoffe können beispielsweise zur Erzeugung einer katalytischen Wirkung dienen oder auch Stoffe sein, die toxische Verbindungen enthalten, welche einer thermischen Behandlung bzw. Zerstörung zugeführt werden sollen.

Als letztes neues Merkmal ist dem Glasschmelzofen 4 gemäß Figur 1 noch eine Abgas-Abschreckkammer 6 zugeordnet, die im Verlauf einer an die Abgas-Abzugssöffnung 47 anschließenden Abgasleitung 60 angeordnet ist. Die Abgas-Abschreckkammer 6 dient dazu, das aus dem Glasschmelzofen 4 austretende heiße Abgas 86 in kurzer Zeit auf eine stark erniedrigte Temperatur zu bringen, um eine Neubildung toxischer Verbindungen innerhalb des Abgases 86 nach dessen Austritt aus dem Glasschmelzofen 4 zu verhindern.

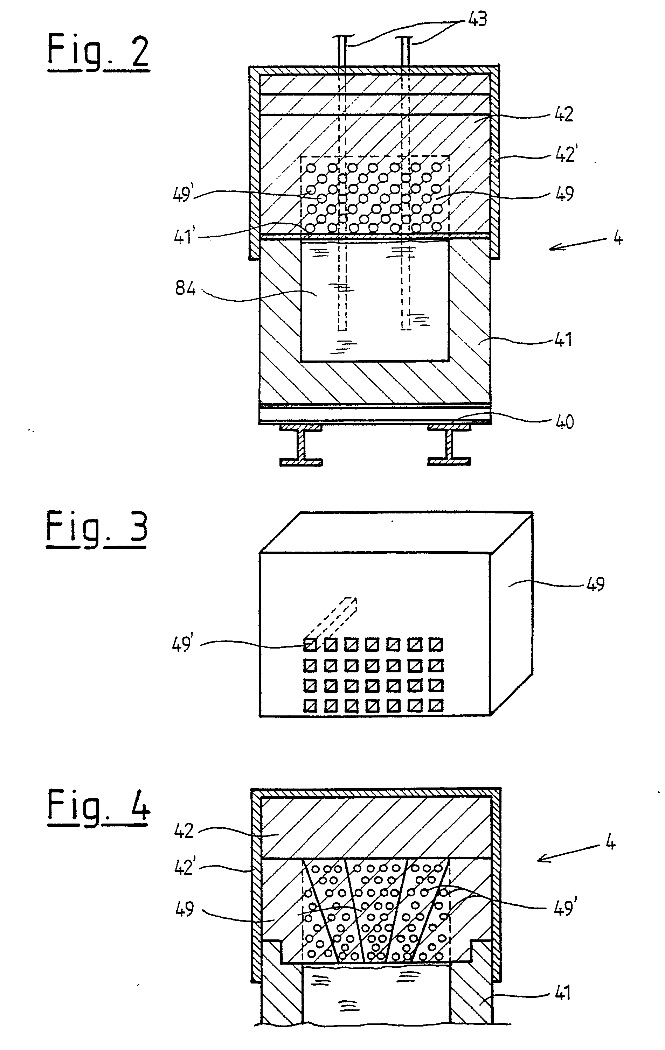

Figur 2 zeigt anhand eines Querschnittes die Gestaltung des Gasströmungs-Leitkörpers 49 mit seinen im Bereich des Inneren des Oberbaus 42 des Glasschmelzofens 4 angeordneten Durchgangsöffnungen 49′. Außenseitig ist der Oberbau 42 wieder von seinem Mantel 42′ umgeben. Im unteren Teils des Glasschmelzofens 4 ist dessen Wanne 41 sichtbar, die auf der Tragkonstruktion 40 ruht. Das Innere der Wanne 41 ist mit der Glasschmelze 84 gefüllt. In diese Glasschmelze 84 tauchen von oben kommend die Heizelektroden 43 ein.

Zusätzlich ist in der Figur 2 noch eine Zwischendecke 41′ erkennbar, die horizontal und quer durch den Glasschmelzofen 4 verläuft und genau am Übergang von der Wanne 41 zum Oberbau 42 angeordnet ist. Die Zwischendecke 41′ besteht aus wärmeleitendem Feuerfestmaterial und dient insbesondere dazu, eine Verdampfung von Be standteilen der Glasschmelze 84, insbesondere von Metalloxiden, zu verhindern, da derartige verdampfende Bestandteile die Abgaszusammensetzung nachteilig beeinflussen können.

Figur 3 zeigt ein geändertes Ausführungsbeispiel des Gasströmungs-Leitkörpers 49, der hier mit im Querschnitt quadratischen Durchgangsöffnungen 49′ ausgebildet ist. Im Unterschied hierzu waren die Durchgangsöf fnungen bei dem Gasströmungs-Leitkörper 49 gemäß Figur 2 mit einem kreisrunden Querschnitt ausgebildet.

Während bei den Figuren 1 - 3 der Gasströmungs-Leitkörper 49 jeweils einstückig als hochkant stehende Platte ausgebildet ist, ist in der Figur ein Ausführungsbeispiel des Gasströmungs-Leithörpers 49 dargestellt, welches sich dadurch kennzeichnet, daß hier der Leitkörper 49 gewölbeförmig ausgebildet ist. Demzufolge ist der Gasströmungs-Leitkörper 49 hier aus mehreren Teilstücken zusammengesetzt, die nach Art eines Gewölbes zusammengestellt sind und sich randseitig auf dem oberen Rand der Wanne 41 des Glasschmelzofens 4 abstützen. Zur Ermöglichung des Durchtritts des Abgases sind auch hier die im freien Bereich des Inneren des Oberbaus 42 liegenden Teile des Gasströmungs-Leitkörpers 49 mit Durchgangsöffnungen 49′ versehen.

**Ansprüche**

1. Vorrichtung zur Durchführung eines Verfahrens zur Uberführung von festen, weitgehend wasserfreien Abfallstoffen in Glasform, die einen geschlossenen Glasschmelzofen umfaßt mit einer Gemengeaufgabevorrichtung am einen Ofenende, mit wenigstens einer Abgas-Abzugsöffnung und einem Glasschmelzeauslauf am anderen Ofenende und mit im Inneren des Oberbaus des Ofens angeordneten Mitteln zur Freihaltung eines Teils der Oberfläche der Glasschmelze von aufgegebenem Gemenge, wobei der gemengefreie Teil der Oberfläche eine Nacherhitzung des darübergeleiteten Abgases durch Wärmeaufnahme aus der Glasschmelze ermöglicht,
dadurch gekennzeichnet, daß im Oberbau (42) des Ofens (4) oberhalb des gemengefreien Teils der Oberfläche (84′) der Glasschmelze (84) wenigstens ein sich quer durch den Oberbau (42) erstreckender, dessen freien Querschnitt im wesentlichen überdeckender Gasströmungs-Leitkörper (49) angeordnet ist, welcher eine Anzahl von parallelen, in Ofenlängsrichtung verlaufenden Durchgangsöffnungen (49′) aufweist.

2. Vorrichtung nach Anspruch 1, dadurch gekennzeichnet, daß mehrere Gasströmungs-Leitkörper (49) im Abstand voneinander in Reihe geschaltet im Oberbau (42) des Glasschmelzofens (4) angeordnet sind.

3. Vorrichtung nach den Ansprüchen 1 und 2, dadurch gekennzeichnet, daß die Gasströmungs-Leitkörper (49) jeweils einstückig hochkant platten- oder balkenförmig oder ein- oder mehrteilig gewölbeförmig mit in Ofenlängsrichtung gesehen einer Dicke L ausgebildet sind.

4. Vorrichtung nach den Ansprüchen 1 bis 3, dadurch gekennzeichnet, daß die Durchgangsöffnungen (49′) jeweils eine Querschnittsfläche F von zwischen 0,5 und 5 cm² und eine der Leitkörperdiche entsprechende Länge L zwischen 50 und 250 mm aufweisen, wobei das Verhältnis zwischen einem aus der Querschnittsfläche F berechneten fiktiven Durchmesser d und der Länge L zwischen 1/5 und 1/20, vorzugsweise 1/10, beträgt.

5. Vorrichtung nach den Ansprüchen 1 bis 4, dadurch gekennzeichnet, daß die Gasströmungs-Leitkörper (49) hochkorrosionsbeständige keramische Bauelemente auf Magnesiumoxid- und/oder Chromoxid-Basis sind.

6. Vorrichtung nach den Ansprüchen 1 bis 5, dadurch gekennzeichnet, daß die Gasströmungs-Leitkörper (49) katalytisch wirksame Bestandteile enthalten und/oder als Oberflächenbeschichtung tragen, wobei die Bestandteile ein oder mehrere Elemente sind, die im Perioden-System der Elemente zur Perioden-Nummer IV oder V und zur Gruppe Ib, IIb, IIIb oder IV bis VIII oder zur Perioden-Nummer VI und zur Gruppe Ib, IIb oder III bis VIII gehören.

7. Vorrichtung nach den Ansprüchen 1 bis 6, dadurch gekennzeichnet, daß im Oberbau (42) des Glasschmelzofens (4) zusätzliche Heizmittel (43′) für eine Beeinflussung der Temperatur des Abgases (86) angeordnet sind.

8. Vorrichtung nach den Ansprüchen 1 bis 7, dadurch gekennzeichnet, daß die zusätzlichen Heizmittel (43′) für eine indirekte Beheizung ausgebildet sind und ein äußeres, wärmeleitendes Schutzrohr aufweisen, innerhalb dessen entweder ein elektrisches Widerstandsheizelement angeordnet ist oder eine Verbrennung fossiler Brennstoffe erfolgt und/oder Verbrennungsgase geführt sind.

9. Vorrichtung nach den Ansprüchen 1 bis 8, dadurch gekennzeichnet, daß die Temperatur des Abgases (86) im Oberbau (42) des Glasschmelzofens (4) oberhalb des gemengefreien Teils der Oberfläche (84′) der Glasschmelze (84) zwischen 1.050 und 1.400° C, vorzugsweise zwischen 1.200 und 1.300° C liegt und daß die Verweilzeit des Abgases (86) in diesem Teil des Oberbaus (42) zwischen 0,5 und 20 s, vorzugsweise zwischen 1 und 2 s, beträgt.

10. Vorrichtung nach den Ansprüche 1 bis 9, dadurch gekennzeichnet, daß knapp oberhalb des gemengefreien Teils der Oberfläche (84′) der Glasschmelze (84) eine im wesentlichen gasdichte, wärmeleitende Zwischendecke (41′) aus Feuerfestmaterial angeordnet ist, wobei das Abgas (86) über die Oberseite dieser Zwischendecke (41′) führbar ist.

11. Vorrichtung nach den Ansprüchen 1 bis 10, dadurch gekennzeichnet, daß der Abgas-Abzugsöffnung (47) des Glasschmelzofens (4) eine Abgas-Abschreckkammer (6) nachgeschaltet ist.

12. Vorrichtung nach den Ansprüchen 1 bis 11, dadurch gekennzeichnet, daß der Oberbau (42) des Glasschmelzofens (4) im Anfangsbereich des gemengefreien Teils der Oberfläche (84') der Glasschmelze (84) wenigstens eine Einlaßöffnung (44') für die Einbringung gasförmiger und/oder flüssiger Stoffe aufweist.

Fig. 1

Fig. 2

Fig. 3

Fig. 4

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int Cl.⁵) |
|---|---|---|---|
| A | <u>US - A - 4 802 445</u> (ROBERTSON, JR.)<br>* Anspruch 1; Fig. *<br>-- | 1 | B 09 B 3/00 |
| A | <u>US - A - 4 762 090</u> (BROWN et al.)<br>* Ansprüche 1,10; Fig. *<br>-- | 1 | |
| A | <u>US - A - 4 817 563</u> (BEISSWENGER et al.)<br>* Zusammenfassung *<br>-- | 1 | |
| A | <u>WO - A1 - 88/02 284</u> (NEUTRALYSIS)<br>* Ansprüche 1,10,11; Fig. 2 *<br>---- | 1 | |
| | | | RECHERCHIERTE SACHGEBIETE (Int Cl.⁵) |
| | | | B 09 B 3/00 |

Der vorliegende Recherchenbericht wurde für alle Patentansprüche erstellt.

| Recherchenort | Abschlußdatum der Recherche | Prüfer |
|---|---|---|
| WIEN | 14-09-1990 | BRUS |

KATEGORIE DER GENANNTEN DOKUMENTEN
X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82